## Europäisches Patentamt

## European Patent Office

## Office européen des brevets

(11) Veröffentlichungsnummer : **0 033 951**
**B1**

(12) **EUROPÄISCHE PATENTSCHRIFT**

(45) Veröffentlichungstag der Patentschrift :
**13.06.84**

(51) Int. Cl.³ : **F 16 B 13/14, E 04 F 13/14**

(21) Anmeldenummer : **81100817.6**

(22) Anmeldetag : **05.02.81**

(54) **Überbrückungshülse.**

(30) Priorität : **06.02.80 DE 3004276**

(43) Veröffentlichungstag der Anmeldung :
**19.08.81 Patentblatt 81/33**

(45) Bekanntmachung des Hinweises auf die Patenterteilung : **13.06.84 Patentblatt 84/24**

(84) Benannte Vertragsstaaten :
**BE FR GB NL**

(56) Entgegenhaltungen :
**FR-A- 2 075 775**
**FR-A- 2 223 587**
**US-A- 4 100 954**

(73) Patentinhaber : **Upat GmbH & Co**
**Freiburger Strasse 9 Postfach 1320**
**D-7830 Emmendingen (DE)**

(72) Erfinder : **Jäkel, Klaus**
**Hans Tomastrasse 5**
**D-7634 Ringsheim (DE)**

(74) Vertreter : **Rackette, Karl, Dipl.-Phys. Dr.-Ing**
**Kaiser-Joseph-Strasse 179 Postfach 1310**
**D-7800 Freiburg (DE)**

Jouve, 18, rue St-Denis, 75001 Paris, France

## Beschreibung

Die Erfindung betrifft eine Überbrückungshülse für den Raum zwischen einer Tragschale und einem Verblendmauerwerk zum abgedichteten Verbinden von in der Tragschale und im Verblendmauerwerk vorgesehenen Bohrungen, in denen bei der nachträglichen Sanierung einer Fassade ein Anker befestigbar ist.

Eine solche Überbrückungshülse in Gestalt eines kurzen Rohrstückes ist aus der FR-A-2 223 587 bekannt. Die Überbrückungshülse ist dabei auf einer in axialer Richtung durchbohrten Ankerstange mit Hilfe zweier Dichtringe befestigt, durch die der Ringraum zwischen der Ankerstange und der Überbrückungshülse gegenüber dem Raum zwischen der Tragschale und dem Verblendmauerwerk abgedichtet ist. Die Dichtringe liegen im eingesetzten Zustand des Ankers und der Überbrückungshülse mit Dichtlippen von innen gegen die Bohrungen in der Tragschale und im Verblendmauerwerk an. Wenn diese Bohrungen im Bereich des zu überbrückenden Raumes ausgebrochen sind, kann eine Abdichtung der Bohrungen nicht mehr erfolgen, so daß ein Teil des verwendeten Kunstharzmörtels in den Raum zwischen der Tragschale und dem Verblendmauerwerk ausfließt.

In der FR-A-2 075 775 ist eine Siebhülse beschrieben, die zum Einkleben von Ankerstangen in weiches Konstruktionsmaterial, wie z. B. Gasbeton, dient. Die Siebhülse verhindert dabei ein Aufweiten des Bohrloches durch die Ankerstange oder die Bruchteile einer Kunstharzmörtelpatone. Andererseits kann durch die am Mantel verteilten Löcher der Siebhülse Kunstharzmörtel austreten und so eine Klebeverbindung herstellen.

Ausgehend von diesem Stand der Technik liegt der Erfindung die Aufgabe zugrunde, eine Überbrückungshülse zur nachträglichen Sanierung eines Verblendmauerwerks bzw. zur Befestigung von Fassadenplatten zu schaffen, die auch bei ausgebrochenen Bohrlochrändern ein Ausfließen des Kunstharzmörtels in den Zwischenraum zwischen der Tragschale und dem Verblendmauerwerk verhindert.

Diese Aufgabe wird erfindungsgemäß dadurch gelöst, daß an mindestens einem Ende der Hülse angrenzend an dem am Umfang geschlossenen Mittelabschnitt eine in radialer Richtung weisende Öffnung ausgebildet ist.

Zweckmäßig ist es, wenn die radiale Öffnung der Hülse die Gestalt einer Abschrägung aufweist. Die Abschrägung kann an ihrer Spitze als Anschlagende ausgebildet sein, so daß auf einfache Weise eine Positionierung der Hülse erzielt werden kann, die sicherstellt, daß der geschlossene Mittelabschnitt den Zwischenraum zwischen der Tragschale und dem Verblendmauerwerk vollständig überbrückt.

Bei einem anderen zweckmäßigen Ausführungsbeispiel der Erfindung besteht die radiale Öffnung aus einer Anzahl von Löchern in dem an den Mittelabschnitt angrenzenden Mantel der Hülse.

Eine einfache Festlegung der Hülse in axialer Richtung ergibt sich dann, wenn die Hülse an einem Ende einen Bördelrand aufweist.

Die erfindungsgemäße Hülse gestattet ein sicheres Überbrücken des Zwischenraumes und benötigt keinerlei besondere Dichtungselemente. Außerdem kann sie zusammen mit einem üblichen Anker verwendet werden.

In der Zeichnung sind Ausführungsbeispiele des Gegenstandes der Erfindung dargestellt. Es zeigen :

Figur 1 eine teilweise im Schnitt gehaltene Seitenansicht eines Fassaden- und Befestigungswand-Abschnittes mit dort eingeführter Hülse vor dem Setzen des Fassadenankers,

Figur 2 die Anordnung gemäß Fig. 1 nach dem Setzen der Ankerstange,

Figuren 3 und 4 zwei unterschiedliche Ausgestaltungen der Hülsen des Fassadenankers,

Figur 5 eine etwas abgewandelte Ausführungsform eines Fassadenankers in einer Gebrauchslage ähnlich Fig. 2,

Figur 6 eine zum Fassadenanker nach Fig. 5 gehörige Hülse, die mittels eines Setzwerkzeuges in die passende Verlegelage gebracht ist und

Fig 7 eine weitere Ausführungsform eines Fassadenankers mit einer einen Bördelrand aufweisenden Hülse in einer der Fig. 6 entsprechenden Darstellung.

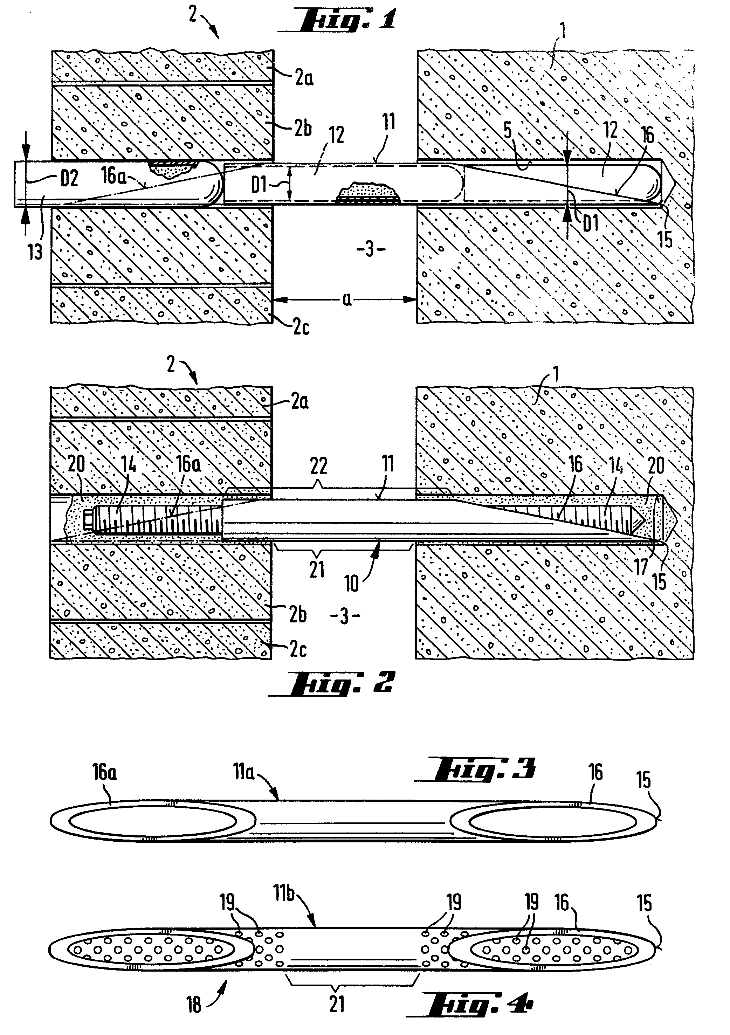

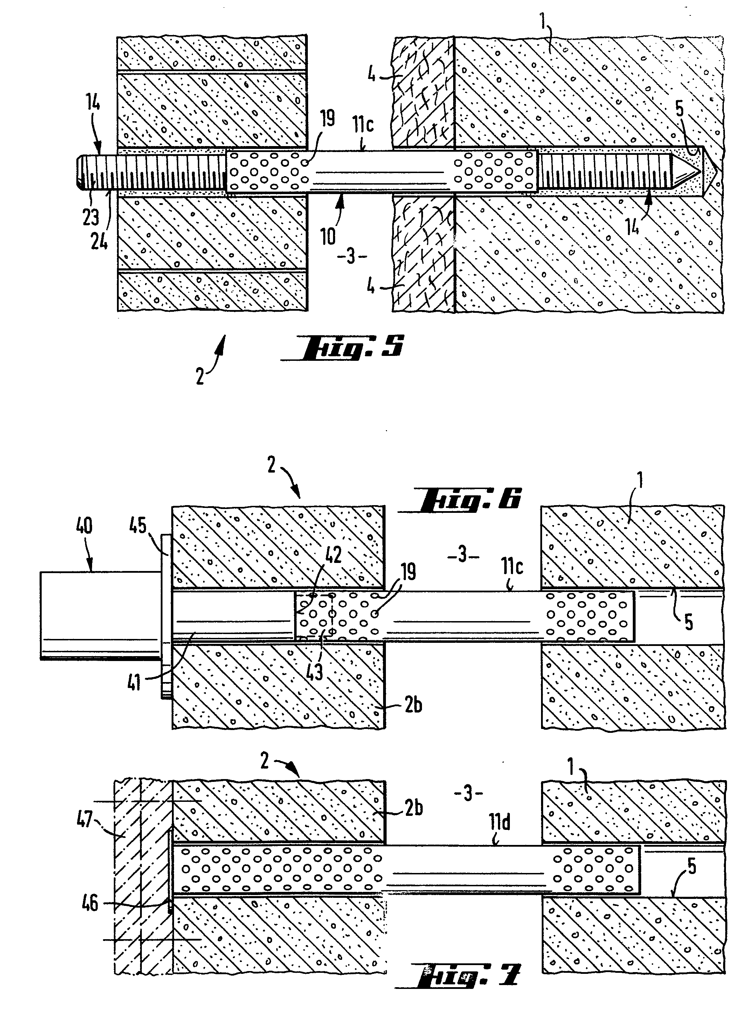

In der Zeichnung bezeichnet das Bezugzeichen 1 eine Wand oder Tragschale eines Bauwerkes, die hier kurz « Befestigungswand 1 » genannt ist. Statt der dargestellten Stahlbetonwand kommt als Tragschale grundsätzlich jedoch jede Art von Mauerwerk in Frage. In einem Abstand a davor befindet sich als Verblendmauerwerk eine im ganzen mit 2 bezeichnete Fassade, die z. B. aus Beton-Fassadenplatten 2a, 2b, 2c besteht. Der zwischen der Befestigungswand 1 und der Fassade 2 befindliche Zwischenraum 3 ist im Ausführungsbeispiel nach Fig. 1 und 2 eine Art Luftschacht. Im Zwischenraum 3 kann aber auch eine Isolierschicht 4 vorgesehen sein, wie sie in Fig. 5 schematisiert angedeutet ist.

Zum Anbringen eines in der Zeichnung dargestellten Fassadenankers 10 wird von außen her durch die Fassade 2 eine durchgehende Bohrung bis in die Befestigungswand 1 eingebracht. Gegebenenfalls wird auch die Isolierschicht 4 mit durchgebohrt. Alsdann werden eine rohrartige Hülse 11 und anschließend Mörtelpatronen 12 und 13 beispielsweise mit Zweikomponenten-Kunstharzmörtel in die Bohrung 5 beziehungsweise Hülse 11 eingesetzt. Statt der Mörtelpatronen ist es auch möglich, Feinstmörtel auf Zementbasis oder bereits aktivierten Kunstharzmörtel einzugeben. Wie in Fig. 1 dargestellt, haben die Mörtelpatronen 12, 13 einen unterschiedlichen Außendurchmesser D1 und D2. Die innerhalb der Hülse 11 befindlichen Mörtelpatronen 12 sind mit ihrem Außendurchmesser D1 an die lichte Weite der Hülse 11 angepaßt. Die außenliegende Mörtelpatrone 13 ist dagegen auf den Innendurchmesser der Bohrung 5 abgestimmt. Auf diese Weise kann eine Anpassung des Mörtelpatronen-Volumens an das Volumen in der Bohrung 5 erreicht werden und die einzelnen Mörtelpatronen 12, 13 bekommen einen sicheren Halt, wenn anschließend die zum Fassadenanker gehörige Ankerstange 14 in die Bohrung 5 eingetrieben wird.

Die Hülse 11 besteht vorzugsweise aus Kunststoff und besitzt in ihrer Ausführung gemäß den Fig. 1 bis 3 an ihrem wandseitigen Ende 15 eine Abschrägung 16. Etwas abgewandelte Ausführungsformen der Hülse 11a, 11b, 11c bzw. 11d sind in den Figuren 3 bis 7 zu erkennen.

Bei der in Fig. 3 dargestellten Hülse 11a sind an beiden Stirnenden Abschrägungen 16 und 16a vorgesehen. Auch in Fig. 1 und 2 ist die zweite Abschrägung 16a strichpunktiert angedeutet. Die Ausführung nach Fig. 3 gestattet eine leichte Kontrolle darüber, daß sich die Hülse 11a bei entsprechend vorgegebener Tiefe der Bohrung 5 in der gewünschten Lage befindet und dadurch der Zwischenraum 3 sicher abgeschlossen überbrückt wird.

Da die Mündungen der Bohrung 5 durch die Hülse 11a gegenüber dem Zwischenraum 3 abgedichtet sind, entweicht kein Kunstharzmörtel in einem ins Gewicht fallenden Volumenanteil in den Zwischenraum 3. Die Abschrägungen 16, 16a sorgen dafür, daß in ihrem Bereich die Mörtelmasse leicht aus der Hülse 11, 11a, 11b austreten kann und eine gute Verbindung zwischen der Ankerstange 14 und der Bohrlochwand 17 hergestellt wird.

Statt aus Kunststoff können die Hülsen 11, 11a, 11b, 11c, 11d auch aus Blech hergestellt sein, z. B. aus einem gerollten Blechmantel oder einem nahtlosen Rohr. Man kann aber auch die Enden eines Hülsenmantels in Überlappung bringen, um eine solche Hülse herzustellen.

Figur 4 zeigt eine etwas abgewandelte Hülse 11b. Sie hat sowohl in ihrem der Fassade 2 zugeordneten Bereich 18 als auch im Bereich ihres inneren Endes 15 Löcher 19, die als Austrittsöffnungen für die Mörtelmasse 20 dienen, wodurch die Verbundwirkung verbessert werden kann. Bei den Hülsen 11, 11a, 11b nach den Figuren 1 bis 4 ist deren inneres Ende 15 jeweils als Anschlagende ausgebildet, wobei die Abschrägung 16 und die Länge der Hülse 11, 11a, 11b so gestaltet sind, daß durch Einschieben solcher Hülsen 11, 11a, 11b bis zum Grund des entsprechend tief ausgebildeten Bohrloches 5 gewährleistet ist, daß der durchgehende Mittelbereich 21 der Hülse 11, 11a, 11b mit Sicherheit den Zwischenraum überbrückt.

Die Ankerstange 14 ist in aller Regel länger als der rohrartige geschlossene Längsabschnitt 22 der Hülse 11, 11a, 11b ausgebildet. Sie kann im Bedarfsfalle auch länger als die zugehörige Bohrung 5 ausgebildet sein, wie in Fig. 5 dargestellt ist. In diesem Fall kann man das vordere, frei aus der Fassade 2 hervorstehende äußere Ende 23 der Ankerstange 14 als Befestigungsmittel, Anschlußelement oder dergleichen ausbilden. Es ist dazu mit einem Gewinde 24 versehen und kann z. B. zur Gerüstbefestigung oder zum Aufsetzen eines Prüfgerätes zur Kontrolle des Verbundes bzw. des Schlupfes des Ankerbolzens dienen. Das tief in die Befestigungswand 1 eingebrachte Ende der Ankerstange 14 kann mit einer den Bauvorschriften entsprechenden Einbindetiefe vermörtelt und die Ankerstange 14 kann nach dem Aushärten des Kunstharzmörtels mit einer hohen Zugkraft belastet werden, da die Zugkraft in die Befestigungswand 1 eingeleitet wird. Die Ankerstange 14 gestattet somit nicht nur das Festlegen der Fassade 2 an der Befestigungswand 1, sondern es können an der Ankerstange 14 auch dauerhaft und sicher andere Gegenstände angebracht werden, z. B. Reklameträger, wobei die zusätzliche Belastung ebenfalls im wesentlichen in die Befestigungswand 1 eingeleitet wird.

Bei der kurzen Ausführung der Ankerstange 14 gemäß Fig. 2 wird die Ankerstange 14 mit einem Setzwerkzeug gesetzt, wobei das aus der Hülse 11 hervorstehende äußere Ende der Ankerstange 14 von der Mörtelmasse umschlossen wird und die aus der Mörtelpatrone heraustretende Masse nur bis zum Setzwerkzeug gelangt. Da in der Regel die Mörtelmasse sich bereits während des Setzvorganges verfestigt, fließt die Mörtelmasse nach dem Abnehmen des Setzwerkzeuges nicht in diesen freien Bereich zurück. Nach dem vollständigen Aushärten der Mörtelmasse kann somit ein Prüfgerät mit einer Gewindemuffe als Verlängerung auf den freien Gewindebereich aufgesetzt werden. Nach Beendigung des Prüfvorgangs wird dieser Bereich von außen mit Mörtel aufgefüllt.

Die in Figuren 5 und 6 gezeigte Ausführungsform der Hülse 11c hat den Vorteil, besonders kurz und materialsparend zu sein. Wenn sie an ihren in die Fassade 2 bzw. in die Befestigungswand 1 eintauchenden Enden mit Löcher 19 versehen ist, ergibt sich auch im Bereich dieser Löcher eine gute Verbindung zwischen der Ankerstange 14 bzw. der Hülse 11c einerseits und der Befestigungswand 1 bzw. der Fassade 2 andererseits.

Bei einer vergleichsweisen kurzen Hülse 11c ergibt sich jedoch das Problem, daß sie genau passend zum Zwischenraum 3 verlegt sein muß, insbesondere wenn sie Löcher 19 aufweist. Dazu ist nach einer Weiterbildung der Erfindung ein Setzwerkzeug 40 vorgesehen. Es besitzt einen Dorn 41 mit einem Anschlagbund 42 und einem auf den Innendurchmesser der Hülse 11c abgestimmten Führungsabschnitt 43. Ferner besitzt das Setzwerkzeug 40 einen Außenanschlagflansch 45. Bei den Hülsenausführungen 11, 11a und 11b ist das Setzwerkzeug 40 nicht erforderlich.

Der Fassadenanker 10 wird zweckmäßigerweise wie ein Klebeanker befestigt, wobei der Zwischenraum 3 mittels entsprechend gestalteter Hülsen 11 überbrückt wird. Die durchsteckmontageartige Anbringungsmöglichkeit des Fassadenankers 10 erlaubt eine besonders einfache nachträgliche Befestigung der Fassade 2, ohne daß diese demontiert zu werden braucht. Die äußeren Enden der Bohrlöcher 5 können gegebenenfalls noch in der üblichen Weise abgeschlossen werden, z. B. durch passend zu Fassadenaußenflächen eingefärbten (nicht näher dargestellten) Mörtel.

Fig. 7 zeigt eine Ausführungsform, bei der die Hülse 11d an einer Stirnseite mit einem Bördelrand 46 ausgebildet ist. Dieser Bördelrand 46 legt sich nach dem Einschieben der Hülse 11d an die Außenseite der Fassade 2 an und begrenzt dadurch die Einstecktiefe der Hülse 11d. Diese Ausführungsform wird zweckmäßig bei Fassaden verwendet, bei denen noch eine Kaschierung oder Blende 47 vorgesehen ist.

**Ansprüche**

1. Überbrückungshülse (11) für den Raum (3) zwischen einer Tragschale (1) und einem Verblendmauerwerk (2) zum abgedichteten Verbinden von in der Tragschale und im Verblendmauerwerk vorgesehenen Bohrungen (5), in denen bei der nachträglichen Sanierung einer Fassade ein Fassadenanker (10) befestigbar ist, dadurch gekennzeichnet, daß an mindestens einem Ende der Hülse (11) angrenzend an den am Umfang geschlossenen Mittelabschnitt (21, 22) eine in radialer Richtung weisende Öffnung (16, 16a, 19) ausgebildet ist.

2. Hülse nach Anspruch 1, dadurch gekennzeichnet, daß die radiale Öffnung der Hülse (11, 11a, 11b) als Abschrägung (16, 16a) ausgebildet ist.

3. Hülse nach Anspruch 2, dadurch gekennzeichnet, daß die Abschrägung (16) an ihrer Spitze als Anschlagende ausgebildet ist.

4. Hülse nach Anspruch 1, dadurch gekennzeichnet, daß als radiale Öffnung eine Anzahl von Löchern (19) in den an den Mittelabschnitt (21) angrenzenden Mantel der Hülse (11b, 11c, 11d) vorgesehen ist.

5. Hülse nach Anspruch 1 oder 4, dadurch gekennzeichnet, daß die Hülse (11d) an einem Ende einen Bördelrand (46) aufweist.

6. Setzwerkzeug (40) zum Einsetzen einer Hülse nach einem der Ansprüche 1 bis 4, dadurch gekennzeichnet, daß es einen Dorn (41) mit einem an seinem Ende ausgebildeten, auf den Innendurchmesser der Hülse (11c) abgestimmten Führungsabschnitt (43) sowie einen am anderen Ende des Dornes (41) angeordneten Außenanschlag flansch (45) aufweist, so daß der Abstand zwischen der Außenseite des Verblendmauerwerks (2) und der eingesetzten Hülse (11c) genau festlegbar ist.

**Claims**

1. A bridging sleeve (11) for the gap (3) between a loadbearing wall (1) and a faced brickwork (2) for sealed connection of bores (5) made in the loadbearing wall and the faced brickwork, in which may be fixed a façade anchor (10) for subsequent restoration of a façade, characterised in that a radially-extending hole (16, 16a, 19) is formed at least at one end of the sleeve (11) next to the central portion (21, 22) which is closed on the periphery.

2. A sleeve according to Claim 1, characterised in that the radial hole of the sleeve (11, 11a, 11b) is formed as a slanting opening (16, 16a).

3. A sleeve according to Claim 2, characterised in that the slanting opening (16) is made at its point as a stop end.

4. A sleeve according to Claim 1, characterised in that, as the radial hole, a plurality of holes (19) are made in the wall of the sleeve (11b, 11c, 11d) next to the central portion (21).

5. A sleeve according to Claim 1 or 4, characterised in that the sleeve (11d) has at one end a flange (46).

6. A setting tool (40) for the insertion of a sleeve according to any one of Claims 1 to 4, characterised in that it has a mandrel (41) having at one its end a guide portion (43) matched to the inner diameter of the sleeve (11c), and at the other end of the mandrel (41) is an outer stop flange (45), so that the distance between the outer surface of the faced brickwork (2) and the inserted sleeve (11c) can be accurately determined.

**Revendications**

1. Douille de pontage (11) destinée à couvrir l'espace (3) compris entre une enceinte porteuse (1) et une maçonnerie de parement (2), afin de réunir à joint étanche des perçages (5) prévus dans l'enceinte porteuse et dans la maçonnerie de parement et dans lesquels, lors de l'assainissement ultérieur d'une façade, on peut fixer des ancrages de parements (10), caractérisé en ce que, à au moins une extrémité de la cheville (11) dans une position adjacente au segment central (21, 22) fermé sur sa périphérie, est formée une ouverture (16, 16a, 19) qui regarde dans une direction radiale.

2. Douille selon la revendication 1, caractérisée en ce que l'ouverture radiale de la douille (11, 11a, 11b) est constituée par une coupe en sifflet (16, 16a).

3. Douille selon la revendication 2, caractérisée en ce que la coupe en sifflet (16) forme à sa pointe une extrémité de butée.

4. Douille selon la revendication 1, caractérisée en ce qu'il est prévu, comme ouverture radiale, une série de trous (19) ménagés dans la paroi latérale de la douille (11b, 11c, 11d) adjacente au segment central (21).

5. Douille selon la revendication 1 ou 4, caractérisée en ce que cette douille (11d) présente à une extrémité un bord rabattu (46).

6. Outil de mise en place (40) destiné à mettre en place une douille selon l'une des revendications 1 à 4, caractérisé en ce qu'il présente un mandrin (41) muni d'un segment de guidage (43) formé à son extrémité, réalisé en fonction du diamètre intérieur de la douille (11c), ainsi qu'une collerette de butée extérieure (45) disposée à l'autre extrémité du mandrin (41) de sorte que la distance entre la face externe de la maçonnerie de parement (2) et la douille (11c) mise en place est fixée avec précision.

0 033 951

**Fig. 1**

**Fig. 2**

**Fig. 3**

**Fig. 4**

*Fig. 5*

*Fig. 6*

*Fig. 7*